# EUROPEAN PATENT APPLICATION

(11) **EP 4 472 170 A1**
(43) Date of publication of application: **04.12.2024**
(21) Application number: 23176993.6
(22) Date of filing: 02.06.2023
(51) Int. Cl.: H04L 61/5007, H04L 61/5084, H04W 76/15

(54) **TECHNIQUES TO EFFICIENTLY COMBINE NON-SEAMLESS-OFFLOAD AND PDU/PDN SESSIONS**

(71) Applicant: Deutsche Telekom AG, 53113 Bonn (DE)
(72) Inventor: AMEND, Markus, 63667 Nidda (DE)
(74) Representative: Braun-Dullaeus Pannen Emmerling Patent- & Rechtsanwaltspartnerschaft mbB

(57) **Abstract**

Techniques to enable efficient non-seamless-offload of PDU- or PDN-sessions in a communication system,
wherein the communication system comprises a sender and a receiver, wherein the sender communicates with the receiver via a 3GPP network and a non-3GPP network,
the method comprising the following steps:
• Assessment step: assessing if the sender communicates with the receiver over a first communication link via the 3GPP network using a first IP-address and if the sender communicates with the receiver over a second communication link via the non-3GPP network using a second IP-address;
• Assigning step: assigning a common IP-address to the sender for the communication via the 3GPP network and/or the non-3GPP network.

## Description

The invention relates to a method, a data traffic offloading entity, a UE (User equipment), a core entity, a routing unit and/or a computer program to enable efficient non-seamless-offload of PDU- or PDN-sessions in a communication system.

In case of a 5G environment, a PDU session provides access to a specific data network through a 5G core as defined in 3GPP. In case of a 4G environment, a PDN session provides access to a specific data network through a 4G core as defined in 3GPP. When ANDSF was introduced in 3GPP Rel. 8, and followed by ANDSP in 5G, it was possible that the core can provide policies to a user equipment to determine whether data traffic shall be sent via the core using PDN or PDU data packets or to trigger a local breakout (non-seamless-offload) to bypass the 4G or the 5G core by using a non-3GPP communication access, for example like Wi-Fi.

However, as a side effect, data traffic that has already been sent over the PDU, the PDN or the local breakout path will be stuck at the selected transport means, because no seamless hand-over takes place between those two communication paths. This is mainly due to the fact that different layer 3 addressing is being used.

In a further enhancement, 3GPP Rel. 16, ATSSS is defined to combine 3GPP and non-3GPP access between an UE or a RG. Different to a PDU session, the new feature of a Multi Access PDU (MA-PDU) session is defined for seamless traffic handling across a 3GPP and a non-3GPP access. Depending on the negotiated features during a MA-PDU session establishment and the exchange of ATSSS rules, it can be selected whether to apply steering, switching or splitting, a steering function (ATSSS-LL or MPTCP), a steering mode (priority based [see TS 23.501]) and a service scope. The latter is using ATSSS specific UE route selection policies (URSP) and ATSSS rules to apply ATSSS settings for any traffic or for particular traffic based on APPID, IP address, etc.

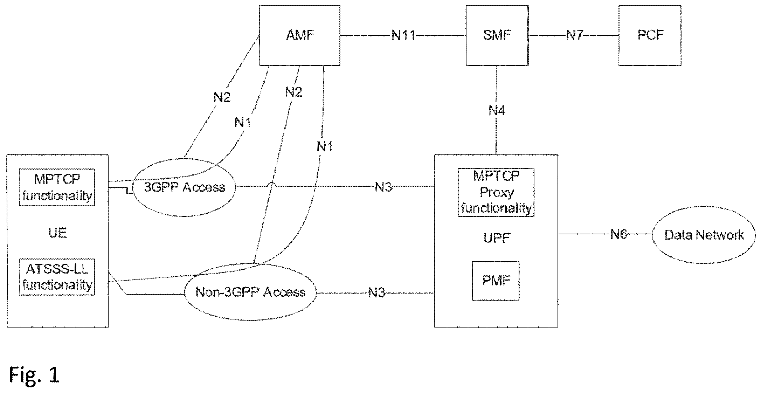

Fig. 1 shows the ATSSS reference architecture.

Using ATSSS will nevertheless redirect any traffic that is sent over the non-3GPP access through the 5G core, mainly via N3IWF or via TNFG and via ATSSS UPF. In the scenarios, in which it is preferred not to send the traffic through the 5G core when using the non-3GPP access, a non-seamless offload indication (as defined in 3GPPP TS 23.503) can be realized using ATSSS rules, which send the traffic directly to the fixed access towards a destination network address. Regarding this aspect, there is a similarity compared to the ANDSF and ANDSP approach. This functionality is also known as local breakout and bypasses any 5G core. This solution can be beneficial for a network operator to offload the 5G core.

However, currently if non-seamless offload indication is being selected, this can be understood as a non-reversible action in the sense that data traffic is directly broken out over the Wi-Fi interface and it cannot return to use ATSSS. Another effect is that data that has already been sent over the ATSSS route, will get lost due to the local breakout. This is mainly due to the fact that different IP addresses are assigned over the fixed access (for example by using a BNG) and the ATSSS UPF.

In the view of above, it is an object of the present invention to provide techniques to efficiently realize non-seamless-offload with PDU/PDN sessions.

This object is solved by the features of the independent claims.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are inter- changeable under appropriate circumstances and that the embodiments of the invention described herein are capable of operation in other sequences than described or illustrated herein.

According to a first aspect of the invention, a method is disclosed to enable efficient non-seamless-offload of PDU- or PDN-sessions in a communication system,
wherein the communication system comprises a sender and a receiver, wherein the sender communicates with the receiver via a first communication link and a second communication link. The first communication link is associated to a first network, wherein the second communication link is associated to a second network. In particular, the first network can be a 3GPP network and the second network can be a non-3GPP network or a further 3GPP network. The communication link is an access link in a sense that it can use different access technologies like 3GPP or non-3GPP. The 3GPP network and can be a 6G, a 5G and/or a 4G network environment. The sender and/or the receiver can be a UE or a RG like a smart phone, computer, tablet, home gateway, router and/or the data service running on a server.

The method comprising the following steps:
- Assessment step: assessing if the sender communicates, in particular with the receiver, over the first communication link, in particular via the 3GPP network, using a first IP-address and if the sender communicates, in particular with the receiver, over the second communication link, in particular via the non-3GPP network, using a second IP-address;
   ∘ the data communication via the first communication link can be a PDU or a PDN session;
   ∘ the data communication via the second network communication link can utilize a Wi-Fi access of the home gateway, wherein the home gateway can be connected to a fixed access technology. Nevertheless, at this point, the second communication link can also use the 4G, 5G or 6G core to route the traffic to the receiver;
   ∘ it is possible that the assessment step is being done by a detection unit that will be described in the following, wherein the detection unit can be a standalone technical entity or it can be implemented as a functional unit on network entities taking part in the routing of the data traffic, in particular, it can be realized as a functional unit within the sender or the receiver; within the context of the invention, there is no technical difference between the terms entity and unit;
   ∘ in the assessment step it can be checked if the receiver to which the data is sent via the first communication link and via the second communication link is actually the same receiver, which can be a precondition in order to apply the inventive method;
   ∘ the first IP-address and the second IP address can be the network addresses assigned to the UE over the two different communication links, respectively;
- Assigning step: assigning a common IP-address to the sender for the communication via the first communication link and/or the second communication link.
   ∘ the assigning step can be performed if both "if-conditions" of the assessment step are true;
   ∘ the common IP-address is the source IP-address information that is part of a data packet that the UE sends when communicating with the receiver; hence, the source IP-address indicates to the receiver where the data packet comes from, namely from the UE;
   ∘ the assignment of the common IP-address can be realized within the UE. In this case, the UE has to be adapted according to the inventive method; the assignment of the common IP-address can also be realized within the network unit of the network operator, in particular within a core unit that is associated to the first and/or the second communication link. This provides the advantage that standard UE can be used to work with the inventive method without having to adapt the UE to the inventive method;
   ∘ hence, the assignment can comprise receiving the data packet of the UE by the network unit and adjusting the source IP-address of the data packet to the common IP-address; in an embodiment, the network unit is being able to decrypt an encrypted data packet and to process the data packet accordingly;
   ∘ for example, the UE communicates via the first communication link with the receiver, then the UE switches its communication to the second communication link. Currently, this would lead to the situation that the receiver gets a data packet that is being transmitted over the second communication link that shows another source IP address than the one that was used over the first communication link. Therefore, the communication will be broken and eventually a new handshake procedure has to start. If however, according to the inventive method, the common IP address is being used then the receiver can always communicate with the same IP address independently of the used communication link so that the communication will not be broken. Hence, it is even possible to hide from the receiver that the UE switched the communication links;
   ∘ in an embodiment, the destination address of the receiver is not being changed;
   ∘ the network unit that can perform the assigning step can a BNG of the fixed network or the detection unit, in particular by a dedicated algorithm implemented on the respective unit;

Using a common IP-address instead of two different IP-addresses provides the effect that an efficient switching between two different access, in particular ATSSS and local break out, is being possible that reduces or even totally avoids data loss (because data is being sent over the "no longer used" IP address). There are two use cases of seamless handover: i) Either between singlepath cellular (3GPP) or local breakout (WiFi) or ii) as named above ATSSS and local breakout. In addition, further Layer 3 communication establishment for the "new" communication link is being avoided.

A possible scenario of the invention can be applied, if a mobile customer with enabled ATSSS is connected to a fixed access Wi-Fi hotspot (that can be provided by home gateway) and the provider of the ATSSS environment and the operator of the fixed access are identical or a have data connection with each other to share the respective communication data that are necessary to perform the assessment step.

In an embodiment, the network unit of the 3GPP network and/or the non-3GPP that perform the assignment of the communication between the sender and receiver are being updated to assign the common IP-address to the data packet send by the UE.

This provides the effect that those network entities can actually use the common IP address for the communication between the sender and the receiver. In principle, it is possible to use this common IP-address for both the communication over the first communication link and/or the second communication link. If the update process of the common IP-address is only started if a local breakout shall actually be applied, then this reduces signaling traffic compared to the case that the update process is being sent in any case. In particular, an offload trigger or the offload indication can signal that the local breakout shall be applied, in particular in the near future. The network entities that receive the update signaling can be the sender, the receiver and/or other routing entities within the communication environment.

In an embodiment, the common IP-address is the first IP-address or the second IP-address.

This provides the advantage that only those network entities need to be informed that do not yet use the common IP-address for the communication. For example, if the first IP-address is being used as the common IP address, only the network entities involved in the communication associated to the second communication link need the IP-address update.. Hence, if the assessment step and/or the assigning step is being performed by the sender or the receiver, those entities do not need the respective update information because they already know the common IP-address. However, in this case they need to signal the common IP-address to the respective networks.

In an embodiment, the communication is offloaded to the second communication link via the non-3GPP network using the common IP-address. In particular, the communication is offloaded with respect to the seamless offload indication (3GPP TS 23.503) that can be provided using the ATSSS rules. Typically, the communication of the second communication link via the non-3GGP access is being configured so that the data traffic takes the shortest possible route between the sender and the receiver. The offloading has the technical effect that resources of the 4G core, 5G core, or 6G core are being spared.

In an embodiment, the communication is offloaded, in particular by applying the seamless offload indication or an offload trigger, to the second communication link via the non-3GPP using the common IP-address if it is determined that a QoS value of the second communication link of the non-3GPP network is better than a first threshold.

This can be performed in a so-called decision step. It is possible that the decision step is being performed by a standalone decision unit or that the decision step is being functionally implemented in network entities providing the communication between the sender and the receiver, in particular the decision step can be implemented as an algorithm within the sender. This feature ensures that the data communication is only offloaded to the fixed access if data communication is sufficiently good for the customer. A typically case is, when the sender can communicate in a home environment with sufficiently high QoS values via the Wi-Fi that is being connected to a fixed network architecture. In particular, the first threshold can be dynamically be set by an application that is running to provide a service between sender and the receiver. It is also possible that the offload trigger can be created if the user has consumed a certain mobile communication budget.

In an embodiment, the first threshold is set with respect to an application running on the sender.

This provides the advantage that different applications can set different first threshold according to their specific QoS requirements.

In an embodiment, the assessment step can be performed by a detection unit that comprises a communication interface to the 3GPP network and/or to the non-3GPP network, wherein the detection unit obtains communication data configured to asses if the sender entity communicates with the receiver entity via the 3GPP network using the first IP-address and if the sender entity communicates with the receiver entity via the non-3GPP network using the second IP-address.

Such a detection unit can be located between the mobile network core (4G, 5G, 6G) and the fixed access core (like a BMG) to receive the respective communication information. The information can be stored as database entries.

In an embodiment, the 3GPP network and the non-3GPP network are operated by the same Mobile Network Operator (MNO).

This provides the advantage that the mobile network operator already has the necessary communication information to perform the assessment step when the sender registers or joins the mobile network operator.

If the assessment step is performed when the sender requests to join the 3GPP network and the non-3GPP network of the MNO this provides the advantage that the common IP address can be assigned at a very early stage of the communication.

In an embodiment, the assessment step, the decision step, the IP-update process and/or the offloading trigger is performed by the sender. This provides the advantage, that this step is performed by a device that takes part in the communication anyhow. This also solves the problem if the fixed access and the mobile access are being provided by different network operators so that they don't know about the respective IP-addresses easily - the sender knows about those different IP addresses anyhow. The sender can also easily evaluate if the QoS conditions within the home network are sufficiently good with respect to the threshold to only use the fixed core access and perform the local breakout from ATSSS. However, this embodiment requires a modification of current sender entities like smart phones.

In an embodiment, the assessment step, the decision step, the IP-update process and/or the offloading trigger is performed by a data traffic offloading entity, wherein the data traffic offloading entity can be located within the 3GPP or the non-3GPP network or even between those networks, in the latter case with appropriate communication interfaces to the two networks. The data traffic offloading entity can comprise a decision entity, a trigger entity and/or a detection entity to perform the respective steps.

If the data traffic offloading entity is located within the 3GPP or the non-3GPP network or even between those networks, this provides the advantage that the local breakout can be performed without the need to adapt currently used sender and/or receiver entities. However, it is also possible to implement the data traffic offloading entity as a functional unit within the sender or the receiver.

In an embodiment, the offloading trigger is co-existing to the ATSSS framework, in particular as part of the ATSSS framework. This provides the advantage that N3IWF and/or TNGF (Trusted Non-3GPP Gateway Function) functionalities can still be used. For untrusted non-3GPP access, the N3IWF is the access network node that provides QoS signaling to support QoS differentiation and mapping of QoS flows to non-3GPP access resources. For trusted non-3GPP access, the TNGF is the access network node that provides QoS signaling to support QoS differentiation and mapping of QoS flows to non-3GPP access resources.

In an embodiment, the network entities involved in routing the communication from the sender to the receiver are supplied with a time window after which the offloading using the common IP-Address will start.

This provides the effect that those network entities can prepare themselves that in the near future the common IP-address will be used and that offloading from the 5G core is being performed. For example, sending data packets over the communication path with the first or the second IP-address that is not the common IP-address can be stopped or finished in a regulated way. It is also possible that the application can adjust to the expected QoS values of the fixed access communication in advance.

In an embodiment, a routing unit routes the data packet comprising the first or the common IP-address from the receiver to the sender via the second communication link. The routing unit can be configured to receive information if the data packets shall be routed over the communication network that is associated the second communication link, in particular over the non-3GPP network and thus avoiding the 4G, 5G or 6G core. Of course, the common IP-address can be the first IP address. However, because it is not necessary that the receiver has any knowledge of the common IP-address it can still use the first IP address. In this case, the common or the first IP address is the destination IP address of the data packet generated by the receiver. Especially in the case that the common IP-address is the first IP-address, the data packet would normally not use the communication network that is associated with the second communication link, in particular over the non-3GPP network and thus avoiding the 4G, 5G or 6G core, when traveling from the receiver to the sender. Hence, the routing unit can be located between the receiver and the respective networks (non-3GPP, 3GPP) so that it can route the data traffic via the second communication link and thus avoiding the 4G, 5G or 6G core.

In an embodiment, the sender or the decision unit supplies the routing unit with the information to route the data packet comprising the first or the common IP-address via the second communication link. If the decision unit supplies the routing unit with this information this provides the advantage that there is no need to adapt the UE.

According to a second aspect of the invention, a data-traffic-offloading-entity is disclosed that comprises
- a communication interface configured to receive communication information about a first communication link of the first network and about a second communication link of the second network between a sender and a receiver;
   ∘ in particular, the data-traffic-offloading-entity can be located between the first network and the second network having a communication interface to each of the two networks. It is also possible that the data-traffic-offloading-entity is associated to the first or the second network;
- a processing unit configured
   ∘ to asses if the sender communicates with the receiver over a first communication link via the first network using a first IP-address and if the sender communicates with the receiver over a second communication link via the second network using a second IP-address; and/or
   ∘ to assign a common IP-address to the sender for the communication via the first network and/or the second network.

The data-traffic-offloading-entity provides analog advantages as already described within the context of the invention. In particular, data-traffic-offloading-entity is configured to perform the steps of the method described above. The data-traffic-offloading-entity can comprise a detection entity, trigger entity and/or a decision entity, wherein those entities can also be realized in the embodiment of an algorithm as functional units.

According to a third aspect of the invention, a UE is disclosed to enable efficient non-seamless-offload of PDU- or PDN-sessions in a communication system comprising
- a communication interface configured to receive communication information about a first communication link of the first network and about a second communication link of the second network between a sender and a receiver;
- a processing unit configured
   ∘ to asses if the sender communicates with the receiver over a first communication link via the first network using a first IP-address and if the sender communicates with the receiver over a second communication link via the second network using a second IP-address; this assessment step can functionally be realized in the form of an dedicated algorithm; and/or
   ∘ to assign a common IP-address for the communication via the first network and/or the second network; this assigning step can functionally be realized in the form of a dedicated algorithm.

The UE can be a smart phone, a tablet, a computer or the like that is used by a user who communicate with a data network, in particular with a receiver within the data network. The UE provides analog advantages as already described within the context of the invention. In particular, the UE is configured to perform the steps of the method described above. As the UE anyhow receives communication information from the first communication link and the second communication link, it is possible that the UE extracts the appropriate information to perform the assessment step. By doing the assignments step also within the UE, additional data traffic is being avoided.

According to a fourth aspect of the invention, an assignment entity is disclosed to enable efficient non-seamless-offload of PDU- or PDN-sessions in a communication system, wherein the assignment entity is configured to receive a common IP-address or to set the common IP-address and to assign a common IP-address for the communication via the first network and/or the second network.

In an embodiment, the assignment entity can be a BNG of the second network that can be the non 3GPP network.

The Data traffic offloading entity, the UE and/or the assignment entity that perform the assignments step are configured, in particular realized by an appropriate algorithm, to receive the data packet that is being sent from the sender to the receiver and to adjust the destination IP-address (that is associated to the receiver) by replacing it with the common IP address. Hence, those entities are able to perform data manipulation of IP packets.

According to a fifths aspect of the invention, a routing unit to enable efficient non-seamless-offload of PDU- or PDN-sessions in a communication system is disclosed, wherein the routing unit is configured to receive information whether to route the data packet that comprises the common IP-address and is send from the receiver to the sender via the first communication link of the first network or via the second communication link of the second network.

This provides the advantage that there is no need to adapt the receiver to the inventive method and that the data packet is nevertheless rooted over the desired communication link. For example, if 5G core usage shall be avoided, the routing unit receives information to route the data packet over the second communication link that is associated to the non-3GPP network.

According to a sixth aspect of the invention, a computer program is disclosed comprising instructions which, when the program is executed by a computer, cause the computer to carry out the steps of the method described above.

In the following, preferred implementation examples of the present invention are explained with reference to the accompanying figure:
- Fig. 1:: shows an ATSSS reference architecture;
- Fig. 2:: shows a communication system according to the invention;
- Fig. 3:: shows a method according to the invention;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

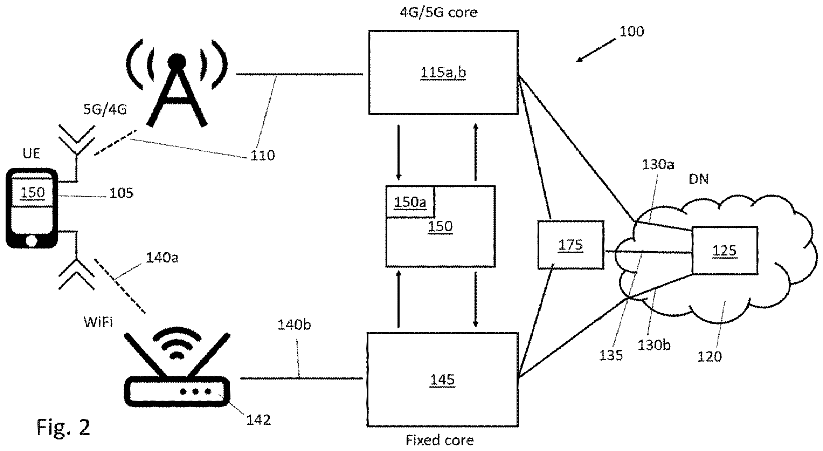

Fig. 2 shows a communication system 100 according to the invention.

A UE 105 that can be a smart phone 105 communicates via a first mobile communication link 110 with a data network 120, wherein a receiver 125 of the communication can be located within that data network 120 or in a further data network. The communication with the receiver 125 is a PDU or a PDN session that is being realized by using a 5G core 115a or a 4G core 115b framework of a mobile network provider. To exchange the data traffic over the first communication link 110 a first IP address 130a is used. For example, the 5G core 115a is providing the 3GPP access.

The UE 105 can also communicate via a second communication link 140 with the receiver 125. The second communication link can comprise a Wi-Fi part 140a from the UE 105 to a home gateway 142 and a fixed access part 140b that transverses a fixed core 145 when exchanging data with the receiver 124 using a second IP address 130b. For example, the fixed core 145 is providing the non-3GPP access.

A data traffic offloading entity 150 is being located between the 5G core 115a (or the 4G core 115b) and the fixed core 145 and shows a communication interface to obtain communication information about the first communication link 110 and about the second communication link 140.

The data traffic offloading entity 150 can also be realized as a functional unit within the UE 105.

A routing unit 175 is located between the 5G core 115a and the fixed core 145 and shows a communication interface to receive the data packets sent from the receiver 125 to the sender 105. The routing unit 175 can receive information, in particular from the network provider or from the sender 105, if the data packet shall be sent over the 5G core 115a or over the fixed core 145.

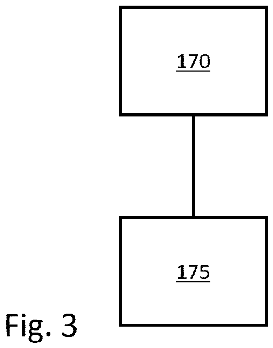

Fig. 3 shows a method performed by the data traffic offloading entity 150:
Assessment step 170: assessing if the sender 105 communicates with the receiver 125 over the first communication link 110 via the 3GPP network 115a,b using the first IP-address 130a and if the sender 105 communicates with the receiver 125 over the second communication link 140 via the non-3GPP network 145 using a second IP-address 130b;

Assigning step 175: assigning a common IP-address 135 to the sender 105 for the communication via the 3GPP network and/or the non-3GPP network.

Hence, the transfer, in particular the local break out, between non-seamless offload communication and ATSSS is solved by assigning the common IP-address 135 to the sender 105. In particular, the common IP-address 135 is transferred to the UPF, the ATSSS UPF, the PGW or to a BNG to which the UE 105 is connected to. Those devices can adjust the source IP of the sender accordingly. This can be achieved by a detection entity 150a that can be part of the data traffic offloading entity 150 and can be located in the mobile network or the fixed network of a MNO who runs both networks. In particular, the common IP-address 135 is assigned to the local breakout path, for example at the BNG, and to the mobile network path, for example at the UPF. This ensures the same layer 3 addressing independent of the selected access path.

This provides the benefit that an existing data connection can be seamlessly transferred between non-seamless offload functionality and mobile/ATSSS functionality without interrupting the communication.

Within the context of Fig. 2, the data traffic offloading entity 150 is informed about a request of the UE 105 to join the 3GPP network 115 and the non-3GPP network 145, which are both controlled by a single MNO. The data traffic offloading entity 150, in particular the detection entity 150a, is then configured to instruct other networks entities (which are responsible for access specific IP-address assignment) in the 3GPP network 115 and the non-3GPP network 145 to use the common IP-address 135.

In an embodiment, the UE 105 uses a Multi-Access PDU session (MA-PDU) as it is specified for ATSSS communication. When entering a Wi-Fi communication area in which it is desirable to bypass the 5G core communication, for example within the home Wi-Fi environment with sufficiently good QoS values, a non-seamless offload policy is used to avoid 5G core 115a usage.

This offloading process will change the data traffic flow using an encapsulating traffic that is being routed through the 5G core 115a to a direct forwarding of the traffic via the Wi-Fi communication link 140a using the shortest way possible through the attached fixed core 145 network. This avoids the Wi-Fi part of a MA-PDU session being redirected via N3IWF, TNAN or TWIF to the 5G core 115a.

In a further embodiment, the routing unit 175 that connects the mobile network 115a,b and the fixed network 145 is updated with the selected access path to route the traffic either to the mobile network 115a,b or to the fixed network 145. Hence, a routing information update can be performed by a trigger entity when applying the non-seamless offload. The trigger entity can also be part of the data traffic offloading entity 150. This provides the advantage that if non-seamless offload is applied, the router that is responsible to route the traffic from the data network uses the communication link through the fixed network and bypasses the mobile network. In case the non-seamless offload is being released again, the corresponding routers are being updated to route the traffic again to the responsible PGW or UPF. This enables that uplink and downlink traffic between the sender 105 and the receiver 125 can seamlessly be handed-over in the presence of non-seamless-offload.

In a further embodiment, the trigger entity and can also consider layer 4 information regarding the non-seamless-offload policy and regarding the routing updates. This provides the benefit that if non-seamless-offload applies to a subset of data traffic that can be distinguished based on layer 4 information, this traffic can be routed accordingly in either direction.

The method can also make use of a decision entity, that decides if non-seamless offload shall be applied or released again. For example, if the UE 105 is connected to the home network with good Wi-Fi quality, non-seamless offload can be applied. If the QoS conditions get worse, the local breakout can be released again. For that purpose, the decision entity can use location information or access information (like RSSI, Wi-Fi standard, cellular standard).

It is possible, that the UE 150 is being designed to perform the steps according to the method.

## Claims

1. A method to enable efficient non-seamless-offload of PDU- or PDN-sessions in a communication system,
wherein the communication system comprises a sender and a receiver, wherein the sender communicates with the receiver via a first communication link associated to a first network and a second communication link associated to a second network ,
the method comprising the following steps:
• Assessment step: assessing if the sender communicates over the first communication link using a first IP-address and if the sender communicates over a second communication link using a second IP-address;
• Assigning step: assigning a common IP-address to the sender for the communication via the first communication link and/or the second communication link.

2. The method of any of the claims, wherein the common IP-address is the first IP-address or the second IP-address.

3. The method of any of the claims, wherein the communication is offloaded to the second communication link via the second network, in particular a non-3GPP network, using the common IP-address.

4. The method of claim 3, wherein the communication is offloaded to the second communication link via the second network using the common IP-address if it is determined that a QoS value of the second communication link of the second network is better than a first threshold

5. The method of claim 4, wherein the threshold is set with respect to an application running on the sender or receiver.

6. The method of any of the claims, wherein the assessment step can be performed by a detection unit that comprises a communication interface to the first network and/or to the second network, wherein the detection unit obtains communication data configured to asses if the sender entity communicates with the receiver entity via the first network using the first IP-address and if the sender entity communicates with the receiver entity via the second network using the second IP-address.

7. The method of any of the claims, wherein the first network and the second network are operated by the same Mobile Network Operator.

8. The method of any of the claim 7, wherein the assessment step is performed when the sender requests to join the first network and the second network of the MNO.

9. The method of any of the claims, wherein the assessment step, the decision step, the IP-update process and/or the offloading trigger is performed by the sender and/or the receiver.

10. The method of any of the claims, wherein the offloading trigger is co-existing to the ATSSS framework.

11. The method of any of the claims, wherein a routing unit routes the data packet comprising the first or the common IP-address from the receiver to the sender via the second communication link, wherein the routing unit is located between the receiver and the first and the second networks.

12. Data traffic offloading entity that comprises
• a communication interface configured to receive communication information about a first communication link of a first network and about a second communication link of a second network between a sender and a receiver;
• a processing unit configured
∘ to asses if the sender communicates with the receiver over the first communication link via the first network using a first IP-address and if the sender communicates with the receiver over a second communication link via the second network using a second IP-address; and/or
∘ to assign a common IP-address for the communication via the first network and/or the second network.

13. UE to enable efficient non-seamless-offload of PDU- or PDN-sessions in a communication system comprising
• a communication interface configured to receive communication information about a first communication link of a first network and about a second communication link of a second network between a sender and a receiver;
• a processing unit configured
∘ to asses if the sender communicates with the receiver over a first communication link via the first network using a first IP-address and if the sender communicates with the receiver over a second communication link via the second network using a second IP-address; and/or
∘ to assign a common IP-address for the communication via the first network and/or the second network.

14. Assignment entity to enable efficient non-seamless-offload of PDU- or PDN-sessions in a communication system, wherein the assignment entity is configured to receive a common IP-address or to set the common IP-address and to assign a common IP-address for the communication via the first network and/or the second network.

15. Routing unit to enable efficient non-seamless-offload of PDU- or PDN-sessions in a communication system, wherein the routing unit is configured to receive information whether to route a data packet that comprises the common IP-address and that is send from a receiver to a sender via a first communication link of a first network or via a second communication link of a second network.

16. A computer program comprising instructions which, when the program is executed by a computer, cause the computer to carry out the steps of the method of claim 1.

## Amended claims

### Amended claims in accordance with Rule 137(2) EPC.

1. A method to enable efficient non-seamless-offload of PDU- or PDN-sessions in a communication system,
wherein the communication system comprises a sender and a receiver, wherein the sender communicates with the receiver via a first communication link associated to a first network and a second communication link associated to a second network ,
the method comprising the following steps:
• Assessment step: assessing if the sender communicates with the receiver over the first communication link using a first IP-address and if the sender communicates with the receiver over a second communication link using a second IP-address; performing an assigning step if both if-conditions of the assessment step are true;
• the Assigning step: assigning a common IP-address to the sender for the communication via the first communication link and/or the second communication link.

2. The method of any of the claims, wherein the common IP-address is the first IP-address or the second IP-address.

3. The method of any of the claims, wherein the communication is offloaded to the second communication link via the second network, in particular a non-3GPP network, using the common IP-address.

4. The method of claim 3, wherein the communication is offloaded to the second communication link via the second network using the common IP-address if it is determined that a QoS value of the second communication link of the second network is better than a first threshold

5. The method of claim 4, wherein the threshold is set with respect to an application running on the sender or receiver.

6. The method of any of the claims, wherein the assessment step can be performed by a detection unit that comprises a communication interface to the first network and/or to the second network, wherein the detection unit obtains communication data configured to asses if the sender entity communicates with the receiver entity via the first network using the first IP-address and if the sender entity communicates with the receiver entity via the second network using the second IP-address.

7. The method of any of the claims, wherein the first network and the second network are operated by the same Mobile Network Operator.

8. The method of any of the claim 7, wherein the assessment step is performed when the sender requests to join the first network and the second network of the MNO.

9. The method of any of the claims, wherein the assessment step, the decision step, an IP-update process and/or an offloading trigger is performed by the sender and/or the receiver.

10. The method of any of the claims, wherein an offloading trigger is coexisting to the ATSSS framework.

11. The method of any of the claims, wherein a routing unit routes the data packet comprising the first or the common IP-address from the receiver to the sender via the second communication link, wherein the routing unit is located between the receiver and the first and the second networks.

12. Data traffic offloading entity that comprises
• a communication interface configured to receive communication information about a first communication link of a first network and about a second communication link of a second network between a sender and a receiver;
• a processing unit configured
∘ to asses if the sender communicates with the receiver over the first communication link via the first network using a first IP-address and if the sender communicates with the receiver over a second communication link via the second network using a second IP-address; and/or
∘ to assign a common IP-address for the communication via the first network and/or the second network.

13. UE to enable efficient non-seamless-offload of PDU- or PDN-sessions in a communication system comprising
• a communication interface configured to receive communication information about a first communication link of a first network and about a second communication link of a second network between a sender and a receiver;
• a processing unit configured
∘ to asses if the sender communicates with the receiver over a first communication link via the first network using a first IP-address and if the sender communicates with the receiver over a second communication link via the second network using a second IP-address; and/or
∘ to assign a common IP-address for the communication via the first network and/or the second network.

14. Assignment entity to enable efficient non-seamless-offload of PDU- or PDN-sessions in a communication system, wherein the assignment entity is configured to receive a common IP-address or to set the common IP-address and to assign a common IP-address for the communication via the first network and/or the second network.

15. Routing unit to enable efficient non-seamless-offload of PDU- or PDN-sessions in a communication system, wherein the routing unit is configured to receive information whether to route a data packet that comprises the common IP-address and that is send from a receiver to a sender via a first communication link of a first network or via a second communication link of a second network.

16. A computer program comprising instructions which, when the program is executed by a computer, cause the computer to carry out the steps of the method of claim 1.
